# FASCICULE DE BREVET EUROPEEN

(11) **EP 2 731 755 B1**
(45) Date de publication et mention de la délivrance du brevet: **18.07.2018**
(21) Numéro de dépôt: 11767015.8
(22) Date de dépôt: 10.10.2011
(51) Int. Cl.: B23Q 17/22, B23B 25/06

(54) **PROCÉDÉ DE CENTRAGE D'OUTILS SUR UNE MACHINE D'USINAGE ET DISPOSITIF D'AIDE AU CENTRAGE POUR METTRE EN OEUVRE LEDIT PROCÉDÉ**
VERFAHREN ZUR ZENTRIERUNG VON WERKZEUGEN AN EINER BEARBEITUNGSVORRICHTUNG UND ZENTRIERHILFE ZUR DURCHFÜHRUNG DIESES VERFAHRENS
METHOD FOR CENTERING TOOLS ON MACHINING EQUIPMENT, AND CENTERING AID FOR IMPLEMENTING SAID METHOD

(30) Priorité: 14.07.2011 EP 11173999
(43) Date de publication de la demande: 21.05.2014
(73) Titulaire: Wibemo S.A., 2832 Rebeuvelier (CH)
(72) Inventeur: AMBÜHL, Stéphane, CH-2740 Moutier (CH); VEDELAGO, David, CH-2608 Courtelary (CH); LIECHTI, Alain, CH-2738 Court (CH)
(74) Mandataire: Gevers SA
(86) Numéro de dépôt international: PCT/EP2011/067646
(87) Numéro de publication internationale: WO 2013/007316

(56) Documents cités:
- EP-A2- 0 350 799
- EP-A2- 1 162 030
- DE-A1-102004 015 697

## Description

### Domaine technique

La présente invention se rapporte au domaine technique général de l'usinage. L'invention se rapporte plus particulièrement au centrage d'outils sur des machines d'usinage, par exemple des machines de décolletage du genre tours à commande numérique. La présente invention trouve son application sur tout type de machines d'usinage.

Ces machines, notamment les machines de décolletage, comportent en général un dispositif de canon tournant ou un dispositif de canon fixe.

Dans la présente invention, les termes « dispositif de canon tournant » doivent être entendus comme désignant également un dispositif de canon fixe associé à un dispositif tournant additionnel.

A titre d'exemple, les machines de décolletage dont il est question dans la présente invention, permettent en général d'usiner des pièces de faibles dimensions utilisées par exemple dans l'horlogerie, dans le domaine de l'automobile, dans l'électronique ou dans le domaine médical. Pour les pièces de haute précision présentant des dimensions réduites, la précision de positionnement des outils et notamment leur centrage, est essentielle.

Un tel centrage permet également de définir une position de référence la plus précise possible, à partir de laquelle sont calculés des déplacements d'outils lors d'opérations d'usinage. L'invention permet de centrer des outils tels que des mèches ou autres outils à corps cylindrique, montés sur une broche et au centre des roulements d'un porte-canon, ledit centre constituant en somme un centre absolu.

La présente invention trouve aussi son application sur d'autres machines d'usinage telles que des machines à tailler.

L'invention concerne plus particulièrement le centrage d'outils de perçage, d'outils en bout, de broches de perçage, de broches de contre-perçage, de broches de poupées centrales ou principales, de contre-broches ou de contre-opérations.

Pour des raisons de simplification de la présentation, il sera fait référence dans la suite de la description, à des outils qu'il conviendra d'entendre au sens large, c'est-à-dire comprenant notamment les exemples précités ainsi que des outils verticaux.

La présente invention concerne donc également le centrage de broches porte-outil, porte-outil monobloc, canon monobloc ou le centrage d'autres éléments comportant une broche porte-outil.

A titre d'exemple, un outil en bout, présentant un écart de centrage, subit d'énormes contraintes mécaniques, qui conduisent souvent à une rupture prématurée dudit outil. Un centrage précis de l'outil permet de réduire substantiellement les contraintes mécaniques auxquelles est soumis l'outil et d'augmenter par conséquent la durée de vie dudit outil.

### Etat de la technique

Différentes méthodes de centrage de broches sont connues. On connait ainsi la méthode appelée « centrage pointe à pointe », laquelle consiste à former une pointe sur une barre de matière, de manière présenter un cône d'environ 20° à 30°. Une même pointe est formée sur un barreau en métal dur. On dispose ensuite les deux pointes en vis-à-vis et on procède au centrage, à l'aide d'un instrument du genre loupe. Une telle méthode présente l'inconvénient de reposer exclusivement sur l'expérience et sur la précision de la vue d'un opérateur.

Une autre méthode appelée « centrage pointe étampe sur matière » consiste à utiliser un barreau de métal dur présentant un pointe et une barre de matière. On présente le barreau de métal dur face à la barre et on étampe une marque sur quelques centièmes de millimètres. Cette marque va permettre de définir si la pointe de l'outil est centré ou non. On réalise un second point de centre, mis hors centre, après avoir déplacé le barreau pour déterminer un axe de déplacement et coupé un lopin de matière. On mesure ensuite si le second point de centre ainsi obtenu est bien centré avec un microscope. Dans la négative on corrige le décentrage mesuré en déplaçant le barreau suivant l'axe de déplacement, mécanique ou numérique selon le type de machine. On répète ensuite l'opération d'étampage pour s'assurer que la correction est bonne. Une telle méthode de centrage nécessite beaucoup de temps. Il n'est pas rare que l'obtention d'un centrage correcte nécessite jusqu'à deux heures.

Une autre méthode appelée «centrage type comparateur» consiste à disposer un comparateur dans une pince ou dans une broche de perçage. On mesure ensuite, sur un barreau de métal ou sur le cône du porte-canon ou de la broche de perçage, la concentricité pour effectuer un centrage. Cette méthode détermine une concentricité d'ensemble et non la concentricité du barreau par rapport au canon. L'utilisation d'un comparateur génère par ailleurs un porte-à-faux d'environ 50 mm à 80 mm. Une erreur de centrage est donc possible sur une telle distance.

Toutes ces méthodes ont en commun de présenter un manque de précision manifeste. En effet, la précision atteinte avec ces méthodes est de l'ordre du centième de millimètre. Une telle précision de centrage n'est souvent pas compatible avec la fabrication de pièce de haute précision présentant des dimensions très réduites.

On connaît également par l'intermédiaire du document WO 2007/02393, un dispositif optique de réglage de la position des outils de coupe ou en bout par rapport à un axe central d'un canon de guidage de la pièce à traiter, d'un tour automatique. Ce dispositif comprend au moins une caméra pourvue d'au moins un tube d'extension munie d'au moins une lentille. Ce dispositif comprend également un ordinateur auquel est transmise l'image de l'ouverture du canon de guidage et d'une partie de l'outil. Un tel dispositif présente l'inconvénient de nécessiter des moyens complexes, notamment optiques et informatiques pour procéder à un réglage. Le procédé mis en oeuvre par un tel dispositif est également complexe dans la mesure où il comprend des étapes au cours desquelles, un positionnement et un réglage d'éléments optiques sont nécessaires. En outre, une grande précision dans la montage du dispositif est requise. Un tel réglage peut donc s'avérer long et difficile pour un opérateur habituel travaillant sur une machine de décolletage. Il faut aussi veiller à une très grande propreté. En effet, les éléments optiques ne sont plus fiables dès la présence de la moindre goutte d'huile. DE-102004015697-A décrit un procédé selon le préambule de la revendication 1 et EP-1162030-A décrit un dispositif selon le préambule de la revendication 7.

### Divulgation de l'invention

L'objet de l'invention vise à remédier aux inconvénients précités en fournissant un nouveau dispositif d'aide au centrage d'outils pour des machines de décolletage, améliorant substantiellement la précision de centrage.

Un autre objet de la présente invention vise à proposer un nouveau procédé de centrage d'outils sur des machines de décolletage, permettant notamment de simplifier les opérations de centrage et de diminuer le temps nécessaire aux dites opérations de centrage.

Les objets assignés à l'invention sont atteint à l'aide d'un procédé de centrage d'un outil, d'une broche porte-outil ou d'un élément comportant une broche porte-outil d'une machine d'usinage comportant un dispositif de canon tournant,
caractérisé en ce qu'il consiste à :
- a) monter l'outil dans une broche porte-outil,
- b) fixer une sonde de mesure de distances sur le nez du dispositif de canon tournant ou sur une pince de canon tournant,
- c) déplacer la broche porte-outil pour amener le corps de l'outil en regard de la sonde de mesure,
- d) tourner le dispositif de canon tournant pour placer la sonde de mesure dans une première position de mesure,
- e) effectuer au moins une première mesure de la distance séparant la sonde de mesure de l'outil,
- f) utiliser la première mesure pour initialiser la sonde de mesure,
- g) tourner le dispositif de canon tournant pour placer la sonde de mesure dans une seconde position de mesure, espacée angulairement d'environ 180° de la première position de mesure,
- h) effectuer au moins une mesure complémentaire de la distance séparant la sonde de mesure de mesure de l'outil,
- i) utiliser la valeur de la deuxième mesure, correspondant à un écart de centrage selon une direction déterminée, pour corriger la position de la broche porte-outil et annuler l'écart de centrage,
- j) tourner le dispositif de canon tournant pour placer la sonde de mesure dans une troisième position de mesure, espacée angulairement d'environ 90° de la première position de mesure et reprendre les étapes h) et i).

Selon un exemple de mise en oeuvre, le procédé conforme à l'invention consiste à utiliser un détecteur inductif comme sonde de mesure.

Selon un exemple de mise en oeuvre, le procédé conforme à l'invention consiste à vérifier que la sonde de mesure est disposée à une distance optimale du corps cylindrique de l'outil avant d'effectuer des mesures.

Selon un exemple de mise en oeuvre, le procédé conforme à l'invention consiste à afficher le résultat de la première mesure au cours de l'étape e) et à ramener à zéro l'affichage au cours de l'étape f).

Selon un exemple de mise en oeuvre, le procédé conforme à l'invention consiste à afficher le résultat de la seconde mesure au cours de l'étape h) et à déplacer la broche porte-outil pour ramener l'affichage à zéro au cours de l'étape i).

Selon un exemple de mise en oeuvre, le procédé conforme à l'invention consiste à utiliser des moyens automatisés de la machine d'usinage pour mettre en oeuvre au moins certaines des étapes a) à j).

Les objets assignés à l'invention sont également atteints à l'aide d'un dispositif d'aide au centrage d'un outil, d'une broche porte-outil ou d'un élément comportant une broche porte-outil sur une machine de décolletage comportant un dispositif de canon tournant, caractérisé en ce qu'il comprend :
- une bague d'adaptation destinée à être fixée et solidarisée en rotation sur un nez du dispositif de canon tournant ou sur une pince de canon tournant,
- une sonde de mesure de distances montée sur la bague d'adaptation de manière à venir en regard d'une partie cylindrique de l'outil, lequel est monté dans une broche porte-outil de la machine d'usinage, la bague d'adaptation permettant de disposer la sonde de mesure dans au moins trois positions de mesure distinctes,
- un moyen pour ajuster la position de montage de la sonde de mesure sur la bague d'adaptation, permettant ainsi de positionner ladite sonde de mesure à une distance optimale de l'outil,
- des moyens de traitement coopérant avec la sonde de mesure et pour traiter les valeurs mesurées par ladite sonde de mesure et pour fournir des informations sur l'amplitude de déplacement à effectuer par la broche porte-outil de manière à corriger l'écart de centrage de l'outil, de la broche porte-outil ou de l'élément comportant une broche porte-outil, et
caractérisé en que ledit moyen pour ajuster la position de montage de la sonde de mesure sur la bague d'adaptation comprend un perçage radial traversant dans la bague d'adaptation et une goupille élastique engagée dans ledit perçage radial.

Selon un exemple de réalisation du dispositif conforme à l'invention, la sonde de mesure est un détecteur inductif.

Selon un exemple de réalisation du dispositif conforme à l'invention, les moyens de traitement comprennent un boîtier de calcul, de mise en forme et d'affichage des valeurs mesurées par la sonde de mesure.

Selon un exemple de réalisation du dispositif conforme à l'invention, les moyens de traitement comprennent une carte électronique et un moyen d'initialisation ou de remise à zéro de l'affichage.

Selon un exemple de réalisation du dispositif conforme à l'invention, la sonde de mesure coopère avec les moyens de traitement par l'intermédiaire d'une liaison filaire.

Selon un autre exemple de réalisation du dispositif conforme à l'invention, la sonde de mesure coopère avec les moyens de traitement par l'intermédiaire d'une liaison sans fil comprenant un émetteur agencé sur la sonde de mesure et un récepteur relié aux moyens de traitement.

Selon un exemple de réalisation conforme à l'invention, le dispositif d'aide au centrage comprend un moyen pour ajuster la position de montage de la sonde de mesure sur la bague d'adaptation, permettant ainsi de positionner ladite sonde de mesure à une distance optimale de l'outil.

Selon un exemple de réalisation conforme à l'invention, le dispositif d'aide au centrage comprend un jeu de bagues d'adaptation, chacune des bagues d'adaptation étant conformée pour être fixée sur le nez d'un dispositif de canon tournant présentant des dimensions particulières.

Dans le cas où la machine ne permet pas de fixer la bague d'adaptation sur un nez de dispositif de canon tournant, la bague d'adaptation est fixée sur une pince de canon tournant.

Selon un exemple de réalisation du dispositif conforme à l'invention, la bague d'adaptation présente au moins un dégagement de matière pour permettre un contrôle visuel du positionnement de la sonde de mesure par rapport à l'outil dans sa position de travail.

Les objets assignés à l'invention sont également atteints à l'aide d'une machine d'usinage ou de décolletage comportant un dispositif de canon tournant et des moyens de commande et de contrôle automatisés pour piloter le fonctionnement de ladite machine, caractérisée en ce qu'elle comprend un dispositif d'aide au centrage tel que présenté ci-dessus.

A titre d'exemple, les moyens de traitement sont intégrés aux moyens de commande et de contrôle automatisés de la machine d'usinage ou de décolletage.

Un avantage du dispositif d'aide au centrage conforme à l'invention réside dans l'absence de contact entre un élément de mesure et l'outil pour effectuer le centrage. Aucune contrainte n'est ainsi exercée sur l'outil.

Un autre avantage du dispositif d'aide au centrage conforme à l'invention réside dans le fait que le centrage s'effectue en réalité sur l'axe des roulements entraînant le dispositif de canon tournant. Un mauvais centrage d'un canon de guidage n'est donc pas en mesure d'altérer le centrage absolu de l'outil.

Le dispositif d'aide au centrage conforme à l'invention présente aussi l'avantage d'être constitué d'éléments simples à fabriquer et à utiliser.

Le procédé de centrage correspondant peut ainsi être entrepris par un opérateur habituel travaillant sur une machine de décolletage. Aucune utilisation de compétences supplémentaires n'est nécessaire pour effectuer le centrage de l'outil.

Le dispositif d'aide au centrage conforme à l'invention présente aussi l'avantage de diminuer substantiellement le temps nécessaire aux opérations de centrage. En effet, une opération de centrage d'un outil avec un dispositif de centrage conforme à l'invention nécessite environ cinq minutes, alors qu'une opération de centrage utilisant des moyens de l'état de la technique nécessite au moins une heure.

Le dispositif de centrage conforme à l'invention présente aussi l'avantage d'augmenter la précision du centrage. Avec un dispositif de centrage conforme à l'invention, il devient possible d'atteindre une précision de l'ordre du 1/1000 de millimètre, alors que les moyens de l'état de la technique ne permettent d'atteindre qu'une précision de l'ordre du 1/100 de millimètre.

Le procédé conforme à l'invention est remarquable dans la mesure où le centrage est effectué avec un outil disposé dans sa position de travail. Aucune opération de démontage/remontage n'est ainsi nécessaire une fois que l'outil est centré.

Un autre avantage du procédé conforme à l'invention, réside dans la possibilité d'effectuer un centrage d'une poupée principale ou centrale. On utilise alors un canon monobloc comportant une partie arrière rectifiée faisant office de point de référence. La bague d'adaptation est montée sur le nez de la poupée et la mesure est effectuée sur la partie arrière rectifiée du canon monobloc.

Un autre avantage du procédé conforme à l'invention, réside dans la possibilité d'effectuer un centrage des contre-broches et des contre-opérations.

Un autre avantage du procédé conforme à l'invention, réside dans la possibilité d'effectuer un centrage d'outils verticaux, en utilisant un outil de référence. On utilise pour cela un porte-outil monobloc, coudé à 90° et muni d'une partie rectifiée venant se positionner devant la bague d'adaptation à la manière d'un outil de perçage. Ce porte-outil se met en lieu et place d'un porte-burin standard.

### Brève description des dessins

D'autres caractéristiques de la présente invention apparaîtront plus clairement à la lecture de la description qui va suivre, faite en référence au dessin annexé, donné à titre d'exemple non limitatif, dans lequel:
- la figure 1 est une illustration schématique d'un exemple de réalisation du dispositif d'aide au centrage conforme à l'invention dans une position de fonctionnement sur une machine d'usinage,
- la figure 2 est une représentation selon une vue en perspective d'un exemple de réalisation du dispositif d'aide au centrage conforme à l'invention,
- la figure 3 est une représentation selon une vue en perspective d'un exemple de réalisation d'un dispositif de canon tournant d'une machine d'usinage, sur lequel est destiné à coopérer avec le dispositif d'aide au centrage conforme à l'invention,
- la figure 4 est une vue de profil de la bague de mesure d'un exemple de réalisation du dispositif d'aide au centrage conforme à l'invention,
- la figure 5 est une vue selon la direction A de la bague d'adaptation de la figure 4,
- la figure 6 est une vue selon la direction B de la bague d'adaptation de la figure 4,
- et la figure 7 est une vue en perspective de la bague d'adaptation d'un exemple de réalisation du dispositif d'aide au centrage conforme à l'invention.

### Mode(s) de réalisation de l'invention

Les éléments structurellement et fonctionnellement identiques et présents sur plusieurs figures distinctes, sont affectés d'une même référence numérique ou alphanumérique.

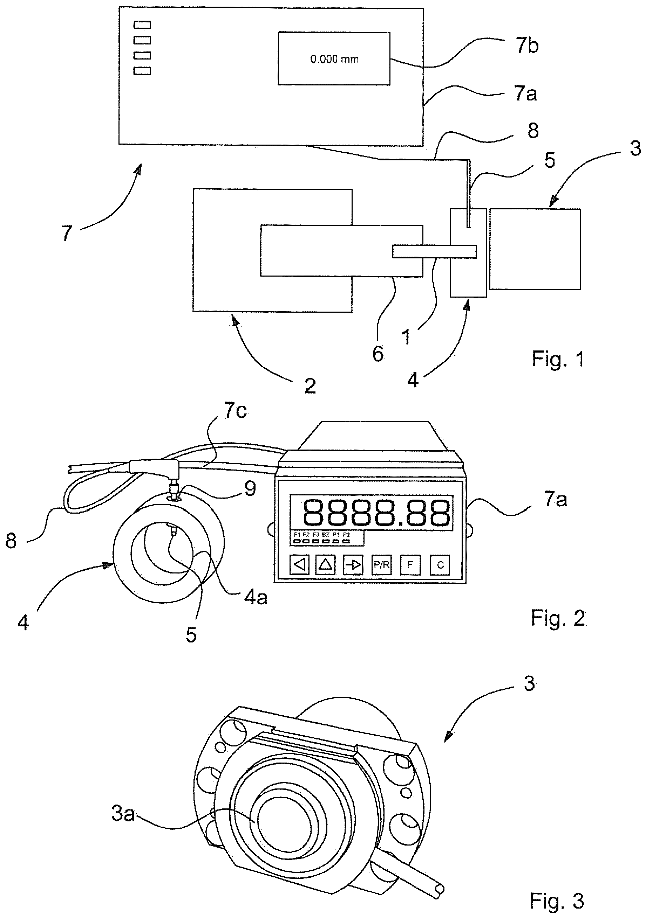

La figure 1 est une illustration schématique d'un exemple de réalisation d'un dispositif d'aide au centrage d'un outil 1 sur une machine d'usinage 2 comportant un dispositif de canon tournant 3.

Il sera fait référence dans la présente description plus particulièrement à une machine d'usinage 2. Cette dernière désigne aussi et de manière évidente une machine de décolletage.

Le dispositif d'aide au centrage comprend une bague d'adaptation 4 destinée à être fixée et solidarisée en rotation sur le dispositif de canon tournant 3.

Le dispositif d'aide au centrage comprend également une sonde de mesure 5 de distances, montée sur la bague d'adaptation 4 de manière à venir en regard du corps cylindrique de l'outil 1.

L'outil 1 est par exemple monté dans une broche porte-outil 6 de la machine d'usinage 2.

La bague d'adaptation 4, présentant une forme cylindrique, permet de disposer la sonde de mesure 5 dans au moins trois positions de mesure distinctes localisées autour de l'outil 1, pour procéder au centrage de l'outil 1.

Le dispositif d'aide au centrage comprend également des moyens de traitement 7 coopérant avec la sonde de mesure 5, pour traiter les valeurs mesurées par ladite sonde de mesure 5 et pour fournir des informations sur l'amplitude du déplacement à effectuer par la broche porte-outil 6 de manière à corriger l'écart de centrage de l'outil 1.

Selon un exemple de réalisation du dispositif d'aide au centrage conforme à l'invention, la sonde de mesure 5 est avantageusement constituée d'un détecteur inductif.

Selon un exemple de réalisation du dispositif conforme à l'invention, les moyens de traitement 7 comprennent un boîtier 7a de calcul et d'affichage pour mettre en forme et afficher les valeurs mesurées par la sonde de mesure 5. Le boîtier 7a permet par exemple d'afficher avec un écran 7b des valeurs de mesure dont l'unité de mesure est sélectionnée par l'opérateur. L'alimentation électrique des composants du boîtier 7a est assurée par exemple par l'intermédiaire d'un cordon d'alimentation 7c.

Selon un exemple de réalisation du dispositif conforme à l'invention, les moyens de traitement 7 comprennent une carte électronique et un moyen d'initialisation ou de remise à zéro de l'affichage. La fonction d'initialisation est par exemple exécutée à l'aide de la carte électronique.

Selon un exemple de réalisation du dispositif conforme à l'invention, la sonde de mesure 5 coopère avec les moyens de traitement 7 par l'intermédiaire d'une liaison filaire 8.

Selon un autre exemple de réalisation du dispositif conforme à l'invention, non représenté, la sonde de mesure 5 coopère avec les moyens de traitement 7 par l'intermédiaire d'une liaison sans fil comprenant un émetteur agencé sur la sonde de mesure 5 et un récepteur relié aux moyens de traitement 7.

La figure 2 est une représentation selon une vue en perspective d'un exemple de réalisation du dispositif de centrage conforme à l'invention.

Selon un exemple de réalisation conforme à l'invention, le dispositif d'aide au centrage comprend un moyen pour ajuster la position de montage de la sonde de mesure 5 sur la bague d'adaptation 4, permettant ainsi de positionner ladite sonde de mesure 5 à une distance optimale de l'outil 1.

Le moyen pour ajuster la distance entre la sonde de mesure 5 et l'outil 1 comprend d'une part un perçage radial 9 traversant, effectué dans la bague d'adaptation 4 et d'autre part une goupille élastique engagée dans ledit perçage radial 9. La goupille élastique permet de faire coulisser la sonde de mesure 5 dans le perçage tout en retenant en place ladite sonde de mesure 5 dès qu'elle a atteint son écartement optimal par rapport à l'outil 1.

Avantageusement, la bague d'adaptation 4 comporte un taraudage 10, orthogonal au perçage radial 9 et débouchant sur ledit perçage radial 9. L'engagement d'une vis dans le taraudage 10 permet ainsi de verrouiller la sonde de mesure 5 sur la bague d'adaptation 4 lorsque la position optimale est atteinte. Cette dernière correspond par exemple à un écartement inférieur à un millimètre pour un détecteur inductif.

La figure 3 est une représentation selon une vue en perspective d'un exemple de réalisation du dispositif de canon tournant 3 d'une machine de décolletage 1, sur lequel est monté la bague d'adaptation 4.

Le dispositif de canon tournant 3 présente un nez 3a sur lequel est montée et fixée la bague d'adaptation 4. Ce montage est effectué avec un alésage 4a axial que présente la bague d'adaptation 4.

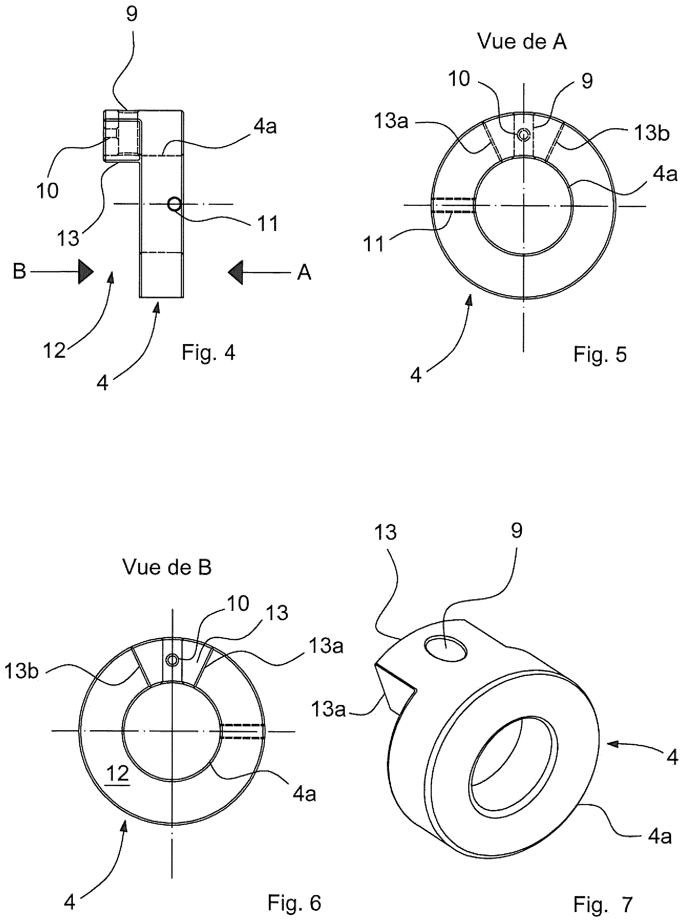

La bague d'adaptation 4 est représentée plus en détails aux figures 4 à 7. La figure 4 est ainsi une vue de profil de la bague d'adaptation 4, la figure 5 est une vue selon la direction A de la bague d'adaptation 4 de la figure 4, et la figure 6 est une vue selon la direction B de la bague d'adaptation de la figure 4. La figure 7 est une vue en perspective de la bague d'adaptation 4.

Avantageusement, un taraudage complémentaire 11, traversant, est ménagé radialement dans la bague d'adaptation 4. L'engagement d'une vis dans le taraudage complémentaire 11 permet de verrouiller la bague d'adaptation 4 sur le nez 3a. La bague d'adaptation 4 peut alors tourner avec le dispositif de canon tournant 3 pour les opérations de centrage de l'outil 1.

Selon un exemple de réalisation du dispositif conforme à l'invention, la bague d'adaptation 4 présente une forme ajourée avec un ou plusieurs dégagements de matière pour permettre un contrôle visuel du positionnement initial de la sonde de mesure 5 par rapport au corps cylindrique de l'outil 1 dans sa position de travail. Ces dégagements de matière permettent ainsi de réaliser des zones d'accès visuel 12 pour l'opérateur chargé de procéder au centrage de l'outil 1.

Dans l'exemple de réalisation tel qu'illustré aux figures, la bague d'adaptation 4 présente sur une portion annulaire et axiale 13, une longueur plus grande. C'est cette portion annulaire et axiale 13, qui délimite les zones d'accès visuel 12, s'étendant entre des extrémités annulaires 13a et 13b de la portion annulaire 13. Les zones d'accès visuel 12 constituent donc géométriquement, la partie virtuelle complémentaire à la portion annulaire et axiale 13 pour constituer un cylindre virtuel complet.

Avantageusement, le dispositif d'aide au centrage comprend un jeu de bagues d'adaptation 4, chacune des bagues d'adaptation 4 étant destinée à être fixée sur le nez 3a d'un dispositif de canon tournant 3 particulier présentant des dimensions particulières.

Le dispositif conforme à l'invention permet ainsi de mettre en oeuvre un procédé de centrage d'un outil 1.

Selon une étape a) le procédé consiste à monter l'outil 1 dans la broche porte-outil 6.

Ensuite, selon une étape b), on fixe la sonde de mesure 5 de distances sur le nez 3a du dispositif de canon tournant 3. On fixe ainsi la bague d'adaptation 4 sur le nez 3a, puis on fixe la sonde de mesure 5 sur la bague d'adaptation 4.

Selon une étape c), on déplace la broche porte-outil 6 pour amener le corps cylindrique de l'outil 1 en regard de la sonde de mesure 5.

Selon une étape d), tourne le dispositif de canon tournant 3 pour placer la sonde de mesure 5 dans une première position de mesure.

Les étapes précédentes sont par exemple effectuées manuellement par un opérateur. Ce dernier vérifie également que la sonde de mesure 5 est disposée à une distance optimale, par exemple inférieure à 1mm, du corps cylindrique de l'outil 1, avant d'effectuer des mesures. Cette vérification est facilitée par la forme ajourée de la bague d'adaptation 4.

Le procédé consiste ensuite, selon une étape e), à effectuer au moins une première mesure de la distance séparant la sonde de mesure 5 de l'outil 1.

Selon une étape f), on utilise la première mesure pour initialiser la sonde de mesure 5.

Ensuite, selon une étape g), on tourne le dispositif de canon tournant 3 pour placer la sonde de mesure 5 dans une seconde position de mesure, espacée angulairement d'environ 180° de la première position de mesure.

Selon une étape h), on effectue, une fois la sonde de mesure 5 initialisée, au moins une mesure complémentaire de la distance séparant la sonde de mesure 5 de l'outil 1.

Selon une étape i), le procédé consiste ensuite à utiliser la valeur de la deuxième mesure, correspondant à un écart de centrage selon une direction déterminée, pour corriger la position de la broche porte-outil 6 et annuler l'écart de centrage de l'outil 1 dans ladite direction déterminée.

Selon une étape j), on tourne ensuite le dispositif de canon tournant 3 pour placer la sonde de mesure 5 dans une troisième position de mesure, espacée angulairement d'environ 90° de la première position de mesure et on reprend les étapes h) et i) précédentes.

A l'issue de ces opérations, l'outil 1 se trouvant dans sa position de travail est donc centré avec une très grande précision.

Selon un exemple de mise en oeuvre, le procédé conforme à l'invention consiste à afficher le résultat de la première mesure au cours de l'étape e) et à ramener à zéro l'affichage au cours de l'étape f). Cette opération est contrôlée visuellement sur l'affichage par l'opérateur.

Selon un exemple de mise en oeuvre, le procédé conforme à l'invention consiste à afficher le résultat de la seconde mesure au cours de l'étape h) et à déplacer la broche porte-outil 6 pour ramener l'affichage à zéro au cours de l'étape i) en partant de la seconde valeur mesurée. Cette opération est également contrôlée visuellement sur l'affichage par l'opérateur.

L'opérateur chargé de centrer l'outil 1, utilise donc un écran d'affichage 7b du boîtier 7a, pour initialiser la sonde de mesure 5 et pour contrôler le déplacement de la broche porte-outil 6. Ce déplacement est effectué par exemple manuellement par l'opérateur.

Selon un autre exemple de mise en oeuvre, le procédé conforme à l'invention consiste à utiliser des moyens automatisés de la machine d'usinage 2 pour mettre en oeuvre au moins certaines étapes du procédé de centrage.

Les valeurs mesurées par la sonde de mesure 5 sont par exemple lues et enregistrées par les moyens de commande et de contrôle automatisés de la machine d'usinage 2, avant d'être traitées pour générer des signaux de commande de déplacement de la broche porte-outil 6 à des fins de centrage.

Les moyens de commande et de contrôle automatisés comprennent avantageusement des programmes informatiques permettant de piloter automatiquement les étapes précités. Les moyens de traitement 7 sont alors avantageusement intégrés à la machine d'usinage 2.

Il est envisageable de mettre en oeuvre le procédé de centrage conforme à l'invention de manière automatisée pour au moins certaines étapes. Il suffit de charger une machine de décolletage 2, comportant des axes numériques, avec au moins un logiciel adéquat.

A titre d'exemple de mise en oeuvre, on peut placer la bague d'adaptation 4 sur le nez 3a, présenter l'outil 1 de manière manuelle ou automatique dans ladite bague d'adaptation 4, ajuster manuellement le positionnement de la sonde de mesure 5 sur la bague d'adaptation 4, calculer l'indexage automatique de la bague d'adaptation 4 par rapport au porte-canon, effectuer automatiquement les mesures et effectuer les opérations de correction sur les axes automatiquement. Un cycle de mesures supplémentaire, à des fins de contrôle, peut avantageusement compléter les étapes précédentes.

## Revendications

1. Procédé de centrage d'un outil (1), d'une broche porte-outil (6) ou d'un élément comportant une broche porte-outil (6) d'une machine d'usinage (2) comportant un dispositif de canon tournant (3),
**caractérisé en ce qu'**il consiste à :
- a) monter l'outil (1) dans une broche porte-outil (6),
- b) fixer une sonde de mesure (5) de distances sur le nez du dispositif de canon tournant (3) ou sur une pince de canon tournant,
- c) déplacer la broche porte-outil (6) pour amener le corps de l'outil (1) en regard de la sonde de mesure (5),
- d) tourner le dispositif de canon tournant (3) pour placer la sonde de mesure (5) dans une première position de mesure,
- e) effectuer au moins une première mesure de la distance séparant la sonde de mesure (5) de l'outil (1),
- f) utiliser la première mesure pour initialiser la sonde de mesure (5),
- g) tourner le dispositif de canon tournant (3) pour placer la sonde de mesure (5) dans une seconde position de mesure, espacée angulairement d'environ 180° de la première position de mesure,
- h) effectuer au moins une mesure complémentaire de la distance séparant la sonde de mesure (5) de l'outil (1),
- i) utiliser la valeur de la deuxième mesure, correspondant à un écart de centrage selon une direction déterminée, pour corriger la position de la broche porte-outil (6) et annuler l'écart de centrage,
- j) tourner le dispositif de canon tournant (3) pour placer la sonde de mesure (5) dans une troisième position de mesure, espacée angulairement d'environ 90° de la première position de mesure et reprendre les étapes h) et i).

2. Procédé de centrage selon la revendication 1, **caractérisé en ce qu'**il consiste à utiliser un détecteur inductif comme sonde de mesure (5).

3. Procédé de centrage selon la revendication 2, **caractérisé en ce qu'**il consiste à vérifier que la sonde de mesure (5) est disposée à un distance optimale de la partie cylindrique de l'outil (1) avant d'effectuer des mesures.

4. Procédé de centrage selon l'une quelconque des revendications 1 à 3, **caractérisé en ce qu'**il consiste à afficher le résultat de la première mesure au cours de l'étape e) et à ramener à zéro l'affichage au cours de l'étape f).

5. Procédé de centrage selon l'une quelconque des revendications 1 à 4, **caractérisé en ce qu'**il consiste à afficher le résultat de la seconde mesure au cours de l'étape h) et à déplacer la broche porte-outil (6) pour ramener l'affichage à zéro au cours de l'étape i).

6. Procédé de centrage selon l'une quelconque des revendications 1 à 5, **caractérisé en ce qu'**il consiste à utiliser des moyens automatisés de la machine d'usinage (2) pour mettre en oeuvre au moins certaines des étapes a) à j).

7. Dispositif d'aide au centrage d'un outil (1), d'une broche porte-outils (6) ou d'un élément comportant une broche porte-outil (6) sur une machine d'usinage (2) comportant un dispositif à canon tournant (3),
comprenant :
- une bague d'adaptation (4) destinée à être fixée et solidarisée en rotation sur un nez (3a) du dispositif de canon tournant (3) ou sur une pince de canon tournant,
- une sonde de mesure (5) de distances montée sur la bague d'adaptation de manière à venir en regard du corps de l'outil (1), lequel est monté dans une broche porte-outil (6) de la machine d'usinage (2), la bague d'adaptation (4) permettant de disposer la sonde de mesure (5) dans au moins trois positions de mesure distinctes,
- un moyen pour ajuster la position de montage de la sonde de mesure (5) sur la bague d'adaptation (4), permettant ainsi de positionner ladite sonde de mesure (5) à une distance optimale de l'outil (1),
- des moyens de traitement (7) coopérant avec la sonde de mesure (5) pour traiter les valeurs mesurées par ladite sonde de mesure (5) et pour fournir des informations sur l'amplitude de déplacement à effectuer par la broche porte-outil (6) de manière à corriger l'écart de centrage de l'outil (1), de la broche porte-outils (6) ou de l'élément comportant une broche porte-outil (6), et
**caractérisé en ce que** ledit moyen pour ajuster la position de montage de la sonde de mesure (5) sur la bague d'adaptation (4) comprend un perçage radial (9) traversant dans la bague d'adaptation et une goupille élastique engagée dans ledit perçage radial (9)

8. Dispositif d'aide au centrage selon la revendication 7, **caractérisé en ce que** la sonde de mesure (5) est un détecteur inductif.

9. Dispositif d'aide au centrage selon la revendication 7 ou 8, **caractérisé en ce que** les moyens de traitement (7) comprennent un boîtier (7a) de calcul, de mise en forme et d'affichage des valeurs mesurées par la sonde de mesure (5).

10. Dispositif d'aide au centrage selon la revendication 9, **caractérisé en ce que** les moyens de traitement (7) comprennent une carte électronique et un moyen d'initialisation ou de remise à zéro de l'affichage.

11. Dispositif d'aide au centrage selon l'une quelconque des revendications 7 à 10, **caractérisé en ce que** la sonde de mesure (5) coopère avec les moyens de traitement (7) par l'intermédiaire d'une liaison filaire (8) ou par l'intermédiaire d'une liaison sans fil comprenant un émetteur agencé sur la sonde de mesure (5) et un récepteur relié aux moyens de traitement (7).

12. Dispositif d'aide au centrage selon l'une quelconque des revendications 7 à 11, **caractérisé en ce qu'**il comprend un jeu de bagues d'adaptation (4), chacune des bagues d'adaptation (4) étant prévue pour être fixée sur le nez (3a) d'un dispositif de canon tournant (3) présentant des dimensions particulières.

13. Dispositif d'aide au centrage selon l'une quelconque des revendications 7 à 12, **caractérisé en ce que** la bague d'adaptation (4) présente au moins un dégagement de matière pour permettre un contrôle visuel du positionnement de la sonde de mesure (5) par rapport à l'outil (1) dans sa position de travail.

14. Machine d'usinage (2) comportant un dispositif de canon tournant (3) et des moyens de commande et de contrôle automatisés pour piloter le fonctionnement de ladite machine, **caractérisée en ce qu'**elle comprend un dispositif d'aide au centrage conforme à l'une quelconque des revendications 7 à 13.

15. Machine d'usinage (2) selon la revendication 14 **caractérisée en ce que** les moyens de traitement (7) sont intégrés aux moyens de commande et de contrôle automatisés.

## Patentansprüche

1. Verfahren zur Zentrierung eines Werkzeugs (1), einer Werkzeughalterspindel (6) oder eines Elements, umfassend eine Werkzeughalterspindel (6) einer Bearbeitungsmachine (2), umfassend eine Vorrichtung mit Drehzylinder (3),
**dadurch gekennzeichnet, dass** es darin besteht:
- a) das Werkzeug (1) in einer Werkzeughalterspindel (6) zu montieren,
- b) eine Sonde zur Messung (5) von Abständen auf dem Vorsprung der Vorrichtung mit Drehzylinder (3) oder auf einer Zange mit Drehzylinder zu fixieren,
- c) die Werkzeugträgerspindel (6) zu verschieben, um den Körper des Werkzeugs (1) gegenüber der Sonde zur Messung (5) anzubringen
- d) die Vorrichtung mit Drehzylinder (3) zu drehen, um die Sonde zur Messung (5) in einer ersten Messposition zu platzieren,
- e) mindestens eine erste Messung des Abstands durchzuführen, der die Sonde zur Messung (5) vom Werkzeug (1) trennt,
- f) eine erste Messung zu verwenden, um die Sonde zur Messung (5) zu initialisieren,
- d) die Vorrichtung mit Drehzylinder (3) zu drehen, um die Sonde zur Messung (5) in einer zweiten Messposition zu platzieren, die winklig ungefähr 180° von der ersten Messposition entfernt ist,
- h) mindestens eine zusätzliche Messung des Abstands, der die Sonde zur Messung (5) vom Werkzeug (1) trennt, durchzuführen,
- i) den Wert der zweiten Messung zu verwenden, der einer Zentrierungsabweichung gemäß einer bestimmten Richtung entspricht, um die Position der Werkzeugträgerspindel (6) zu korrigieren und die Zentrierungsabweichung zu annullieren,
- j) die Vorrichtung mit Drehzylinder (3) zu drehen, um die Sonde zur Messung (5) in einer dritten Messposition zu platzieren, die winklig ungefähr 90° von der ersten Messposition entfernt ist, und die Schritte h) und i) wiederaufzunehmen.

2. Verfahren zur Zentrierung nach Anspruch 1, **dadurch gekennzeichnet, dass** es darin besteht, einen induktiven Detektor als Sonde zur Messung (5) zu verwenden.

3. Verfahren zur Zentrierung nach Anspruch 2, **dadurch gekennzeichnet, dass** es darin besteht, zu überprüfen, dass die Sonde zur Messung (5) in einem optimalen Abstand vom zylindrischen Teil des Werkzeugs (1) angeordnet ist, bevor Messungen durchgeführt werden.

4. Verfahren zur Zentrierung nach einem beliebigen der Ansprüche 1 bis 3, **dadurch gekennzeichnet, dass** es darin besteht, das Ergebnis der ersten Messung im Laufe von Schritt e) anzuzeigen und die Anzeige im Laufe von Schritt f) wieder auf null zu setzen.

5. Verfahren zur Zentrierung nach einem beliebigen der Ansprüche 1 bis 4, **dadurch gekennzeichnet, dass** es darin besteht, das Ergebnis der zweiten Messung im Laufe von Schritt h) anzuzeigen und die Werkzeughalterspindel (6) zu verschieben, um die Anzeige im Laufe von Schritt i) wieder auf null zu setzen.

6. Verfahren zur Zentrierung nach einem beliebigen der Ansprüche 1 bis 5, **dadurch gekennzeichnet, dass** es darin besteht, die automatisierten Mittel der Bearbeitungsmaschine (2) zu verwenden, um mindestens bestimmte der Schritte a) bis j) durchzuführen.

7. Vorrichtung zur Unterstützung der Zentrierung eines Werkzeugs (1) einer Werkzeughalterspindel (6) oder eines Elements, umfassend eine Werkzeughalterspindel (6), auf einer Bearbeitungsmaschine (2), umfassend eine Vorrichtung mit Drehzylinder (3), umfassend:
- einen Anpassungsring (4), der ausgelegt ist, um auf einem Vorsprung (3a) der Vorrichtung mit Drehzylinder (3) oder auf einer Zange mit Drehzylinder fixiert und damit in Rotation fest verbunden zu werden,
- eine Sonde zur Messung (5) von Abständen, die auf den Anpassungsring montiert ist, um gegenüber dem Körper des Werkzeugs (1) zu gelangen, der in einer Werkzeugträgerspindel (6) der Bearbeitungsmaschine (2) montiert ist, wobei der Anpassungsring (4) ermöglicht, die Sonde zur Messung (5) in mindestens drei verschiedenen Messpositionen anzubringen,
- ein Mittel zum Anpassen der Montageposition der Sonde zur Messung (5), die dem Anpassungsring (4), der so ermöglicht, die Sonde zur Messung (5) in einem optimalen Abstand vom Werkzeug (1) zu positionieren,
- Verarbeitungsmittel (7), die mit der Sonde zur Messung (5) zusammenarbeiten, um die Werte, gemessen von der Sonde zur Messung (5), zu verarbeiten, und um Informationen über die Amplitude der Verschiebungen, die von der Werzeugträgerspindel (6) durchgeführt werden müssen, zu liefern, um die Abweichung der Zentrierung des Werkzeugs (1), der Werkzeugträgerspindel (6) oder des Elements, das eine Werkzeugträgerspindel (6) umfasst, zu korrigieren, und **dadurch gekennzeichnet, dass** das Mittel, um die Montageposition der Sonde zur Messung (5) auf dem Anpassungsring (4) einzustellen, eine radiale Bohrung (9) umfasst, die den Anpassungsring durchquert, und einen elastischen Zapfen, der in der radialen Bohrung (9) eingegriffen ist.

8. Vorrichtung zur Unterstützung der Zentrierung nach Anspruch 7, **dadurch gekennzeichnet, dass** die Sonde zur Messung (5) ein induktiver Detektor ist.

9. Vorrichtung zur Unterstützung der Zentrierung nach Anspruch 7 oder 8, **dadurch gekennzeichnet, dass** die Verarbeitungsmittel (7) ein Berechnungsgehäuse (7a) zur Formgebung und Anzeige der Werte, gemessen von der Sonde zur Messung (5), umfassen.

10. Vorrichtung zur Unterstützung der Zentrierung nach Anspruch 9, **dadurch gekennzeichnet, dass** die Verarbeitungsmittel (7) eine elektronische Karte und ein Mittel zur Initialisierung oder zum Rücksetzen auf null der Anzeige umfassen.

11. Vorrichtung zur Unterstützung der Zentrierung nach einem beliebigen der Ansprüche 7 bis 10, **dadurch gekennzeichnet, dass** die Sonde zur Messung (5) mit den Verarbeitungsmitteln (7) mit Hilfe einer Drahtverbindung (8) mit Hilfe einer drahtlosen Verbindung zusammenarbeitet, umfassend einen Sender, der auf der Sonde zur Messung (5) angeordnet ist, und einen Empfänger, der mit den Verarbeitungsmitteln (7) ist.

12. Vorrichtung zur Unterstützung der Zentrierung nach einem beliebigen der Ansprüche 7 bis 11, **dadurch gekennzeichnet, dass** sie einen Satz Anpassungsringe (4) umfasst, wobei jeder der Anpassungsringe (4) vorgesehen ist, um auf dem Vorsprung (3a) einer Vorrichtung mit Drehzylinder (3) fixiert zu sein, die bestimmte Abmessungen darstellt.

13. Vorrichtung zur Unterstützung der Zentrierung nach einem beliebigen der Ansprüche 7 bis 12, **dadurch gekennzeichnet, dass** der Anpassungsring (4) mindestens eine Freisetzung von Material aufweist, um eine visuelle Kontrolle der Positionierung der Sonde zur Messung (5) mit Bezug auf das Werkzeug (1) in seiner Arbeitsposition zu ermöglichen.

14. Bearbeitungsmaschine (2), umfassend eine Vorrichtung mit Drehzylinder (3) und automatisierte Steuer- und Kontrollmittel, um die Funktion der Maschine zu leiten, **dadurch gekennzeichnet, dass** sie eine Vorrichtung zur Unterstützung gemäß einem beliebigen der Ansprüche 7 bis 13 umfasst.

15. Bearbeitungsmaschine (2) nach Anspruch 14, **dadurch gekennzeichnet, dass** die Verarbeitungsmittel (7) in die automatisierten Steuer- und Kontrollmittel integriert sind.

## Claims

1. A method for centering a tool (1), a tool-holding spindle (6) or an element including a tool-holding spindle (6) of a machining tool (2) including a turning barrel device (3), **characterized in that** it consists of:
- a) mounting the tool (1) in a tool-holding spindle (6),
- b) fastening a distance measuring probe (5) on the nose of the turning barrel device (3) or on a turning barrel clamp,
- c) moving the tool-holding spindle (6) to bring the body of the tool (1) across from the measuring probe (5),
- d) rotating the turning barrel device (3) to place the measuring probe (5) in a first measuring position,
- e) performing at least a first measurement of the distance separating the measuring probe (5) from the tool (1),
- f) using the first measurement to initialize the measuring probe (5),
- g) turning the turning barrel device (3) to place the measuring probe (5) in a second measuring position, spaced angularly by about 180° from the first measuring position,
- h) performing at least one complementary measurement of the distance separating the measuring probe (5) from the tool (1),
- i) using the value of the second measurement, corresponding to a centering deviation in a determined direction, to correct the position of the tool-holding spindle (6) and cancel the centering deviation,
- j) turning the turning barrel device (3) to place the measuring probe (5) in a third measuring position, spaced angularly by about 90° from the first measuring position and repeating steps h) and i).

2. The centering method according to claim 1, **characterized in that** it consists of using an inductive detector as measuring probe (5).

3. The centering method according to claim 2, **characterized in that** it consists of verifying that the measuring probe (5) is arranged at an optimal distance from the cylindrical part of the tool (1) before performing measurements.

4. The centering method according to one of claims 1 to 3, **characterized in that** it consists of displaying the result of the first measurement during step d) and resetting the display during step f).

5. The centering method according to any one of claims 1 to 4, **characterized in that** it consists of displaying the result of the second measurement during step h) and moving the tool-holding spindle (6) to reset the display during step i).

6. The centering method according to any one of claims 1 to 5, **characterized in that** it consists of using automated means of the machining tool (2) to carry out at least some of steps a) to j).

7. A device to assist with the centering of a tool (1), a tool-holding spindle (6) or an element including a tool-holding spindle (6) on a machining tool (2) having a turning barrel device (3),
comprising:
- an adapter ring (4) intended to be fastened and secured in rotation on the nose (3a) of the turning barrel device (3) or on a turning barrel clamp,
- a distance measuring probe (5) mounted on the adapter ring so as to come across from the body of the tool (1), which is mounted in a tool-holding spindle (6) of the machining tool (2), the adapter ring (4) making it possible to arrange the measuring probe (5) in at least three different measuring positions,
- a means for adjusting the mounting position of the measuring probe (5) on the adapter ring (4), thus making it possible to position the measuring probe (5) at an optimal distance from the tool (1),
- processing means (7) cooperating with the measuring probe (5) to process the values measured by said measuring probe (5) and to provide information on the movement amplitude to be performed by the tool-holding spindle (6) so as to correct the centering deviation of the tool (1), the tool-holding spindle (6) or the element having the tool-holding spindle (6), and
**characterized in that** said means for adjusting the mounting position of the measuring probe (5) on the adapter ring (4) comprises a radial piercing (9) traversing the adapter ring and a resilient pin engaged in said radial piercing (9).

8. The centering assistance device according to claim 7, **characterized in that** the measuring probe (5) is an inductive detector.

9. The centering assistance device according to claim 7 or 8, **characterized in that** the processing means (7) comprise a unit (7a) for computing, forming and displaying values measured by the measuring probe (5).

10. The centering assistance device according to claim 9, **characterized in that** the processing means (7) comprise an electronic board and means for initializing or resetting the display.

11. The centering assistance device according to any one of claims 7 to 10, **characterized in that** the measuring probe (5) cooperates with the processing means (7) via a wired connection (8) or via a wireless connection comprising a transmitter arranged on the measuring probe (5) and a receiver connected to the processing means (7).

12. The centering assistance device according to any one of claims 7 to 11, **characterized in that** it comprises a set of adapter rings (4), each of the adapter rings (4) being provided to be fastened on the nose (3a) of a turning barrel device (3) having specific dimensions.

13. The centering assistance device according to any one of claims 7 to 11, **characterized in that** the adapter ring (4) has at least one material recess to allow a visual inspection of the positioning of the measuring probe (5) relative to the tool (1) in its working position.

14. A machining tool (2) having a rotating barrel device (3) and automated command and control means for controlling the operation of said tool, **characterized in that** it comprises a centering assistance device according to any one of claims 7 to 13.

15. The machining tool (2) according to claim 14, **characterized in that** the processing means (7) are integrated into the automated command and control means.
